# EUROPÄISCHE PATENTSCHRIFT

(11) **EP 0 985 566 B1**
(45) Veröffentlichungstag und Bekanntmachung des Hinweises auf die Patenterteilung: **16.03.2005**
(21) Anmeldenummer: 99114712.5
(22) Anmeldetag: 28.07.1999
(51) Int. Cl.: B60J 1/00, B60R 13/08

(54) **Einrichtung zum Schutz des Innenraums eines personenbefördernden Fahrzeugs gegen Aufheizung durch Wärmestrahlung**
Arrangement for protecting the interior of a passenger-carrying vehicle against thermal radiation
Agencement de protection contre le rayonnement thermique de l'intérieur d'un véhicule de transport de voyageurs

(30) Priorität: 13.08.1998 DE 29814539 U
(43) Veröffentlichungstag der Anmeldung: 15.03.2000
(73) Patentinhaber: Krauss-Maffei Wegmann GmbH & Co. KG, 80997 München (DE)
(72) Erfinder: Sprafke, Uwe, Dipl.-Ing., 34270 Schauenburg (DE); Wettstein, Werner, 1470 Estavayer-Le-Lac (CH)
(74) Vertreter: Feder, Wolf-Dietrich, Dr. Dipl.-Phys.

(56) Entgegenhaltungen:
- CH-A- 543 983
- DE-A- 4 123 593
- DE-A- 19 800 167
- US-A- 3 242 625
- US-A- 4 513 548

## Beschreibung

Die Erfindung betrifft eine Einrichtung zum Schutz des Innenraums eines personenbefördernden Fahrzeugs gegen Aufheizung durch Wärmestrahlung.

Bei personenbefördernden Fahrzeugen kann es für die Insassen des Fahrzeugs äußerst störend und unangenehm werden, wenn sich der Innenraum des Fahrzeugs aufgrund einer in ihn eindringenden Wärmestrahlung aufheizt. Eine solche Wärmestrahlung kann eine von außen kommende Sonneneinstrahlung sein, sie kann aber auch aus dem Inneren des Fahrzeugs selbst vom aufgeheizten Motorblock herrühren.

Von ganz besonderer Bedeutung ist allerdings die Sonneneinstrahlung von außen. Das Verhindern der Aufheizung des Innenraums des Fahrzeugs ist von besonderer Bedeutung, beispielsweise bei Fahrzeugen zum Krankenoder Verletztentransport, bei Fahrzeugen zur Personenbeförderung im öffentlichen Nahverkehr und bei Militärfahrzeugen, und zwar sowohl bei Kampffahrzeugen als auch bei Sanitätsfahrzeugen und Fahrzeugen zum Mannschaftstransport.

Es ist bekannt, bei derartigen Fahrzeugen Kühlvorrichtungen in Form von Belüftungs- oder Klimaanlagen zu installieren. Diese erhöhen jedoch den technischen Aufwand bei der Ausrüstung des Fahrzeugs beträchtlich, benötigen zusätzlichen Platz und erhöhen die Störanfälligkeit.

Der Erfindung liegt die Aufgabe zugrunde, eine Einrichtung zum Schutz des Innenraums eines personenbefördernden Fahrzeugs gegen Aufheizung durch Wärmestrahlung zu schaffen, die einfach aufgebaut ist und die an Stelle einer Kühleinrichtung oder in Kombination mit einer solchen Kühleinrichtung eingesetzt werden kann.

Die Lösung dieser Aufgabe geschieht erfindungsgemäß mit den Merkmalen aus dem kennzeichnenden Teil des Schutzanspruchs 1. Vorteilhafte Weiterbildungen der Erfindung sind in den abhängigen Ansprüchen beschrieben.

Die Erfindung beruht auf dem Grundgedanken, es durch gezielte Maßnahmen zu verhindern, daß die aus irgendeiner Richtung einfallende Infrarotstrahlung zu einer Aufheizung des Innenraums führt. Eine Reflexion der Infrarotstrahlung an der Außenseite des Fahrzeugs oder auch an der vom Innenraum abgewandten Seite einer Innenwand sind dabei oft unzweckmäßig, weil solche Maßnahmen an äußeren Oberflächen schlecht durchführbar und entsprechende Beschichtungen leicht beschädigbar sind.

Aus diesem Grunde erfolgt bei der erfindungsgemäßen Einrichtung die Reflexion nicht an der Außenseite der Außen- und/oder Innenwand des Fahrzeugs, sondern vom Innenraum her gesehen vor der Innenfläche einer solchen Außen- und/oder Innenwand des Fahrzeugs. Hier im Innenraum des Fahrzeugs befindet sich an der der Außen- und/oder Innenwand zugekehrten Seite der Abschirmplatten eine Infrarotstrahlen vom Innenraum hergesehen nach außen reflektierende Schicht, wobei von besonderer Bedeutung ist, daß sich zwischen dieser die Infrarotstrahlung nach außen reflektierenden Schicht und der Innenfläche der Außen- und/oder Innenwand des Fahrzeugs ein Luftspalt befindet. Die Wirkungsweise dieser Einrichtung besteht darin, daß sich zwar die Außen- und/oder Innenwand des Fahrzeugs durch die Einwirkung einer Wärmestrahlung aufheizt und entsprechend Infrarotstrahlung in Richtung auf den Innenraum des Fahrzeugs abgibt, daß diese Infrarotstrahlung aber nicht in den Innenraum hineingelangt und dort die vorhandene Luft aufheizen kann, sondern an den Abschirmplatten in den Luftspalt hinein und auf die Außen- und/oder Innenwand zu reflektiert wird, wobei sie im Luftspalt und in dieser Wand absorbiert wird, was dort zu einer zusätzlichen Aufheizung führen kann. Es hat sich gezeigt, daß mit der erfindungsgemäßen Einrichtung bei Wärmeeinstrahlung, insbesondere bei Sonneneinstrahlung, eine wesentlich geringere Aufheizung des Innenraums auftritt als ohne diese Einrichtung.

Die erfindungsgemäße Einrichtung kann in besonders zweckmäßiger Weise so ausgebildet werden, daß sie gleichzeitig zur Absorption der im Fahrzeuginneren erzeugten Schallwellen dient und dadurch der Schallpegel im Innenraum herabgesetzt wird.

Somit wird die erfindungsgemäße Einrichtung zu einer "Multifunktionseinrichtung", durch welche mit einfachen Mitteln die ergonomischen Bedingungen im Innenraum des Fahrzeugs verbessert werden.

Im folgenden wird anhand der beigefügten Zeichnungen am Beispiel eines Kampffahrzeugs ein Ausführungsbeispiel für eine Einrichtung nach der Erfindung näher erläutert.

In den Zeichnungen zeigen:
Fig. 1 im Schnitt einen Teil der Außenwand eines Kampffahrzeuges, an deren Innenseite eine Einrichtung zum Schutz des Innenraums gegen Aufheizung durch Sonneneinstrahlung angeordnet ist;
Fig. 2 einen Teil der Außenwand des Kampffahrzeuges in Aufsicht von innen gesehen mit einer daran befestigten Einrichtung gemäß Fig. 1;
Fig. 3 einen Schnitt nach der Linie III-III in Fig. 2 durch einen Teil einer Abschirmplatte mit einer Befestigungsvorrichtung.

In der Zeichnung ist im Schnitt ein Teil der Außenwand eines Kampffahrzeugs, beispielsweise die Dachplatte 1, eines im übrigen nicht dargestellten Kampfpanzers gezeigt, auf welche von außen Sonneneinstrahlung S einfällt. An der Innenseite dieser Dachplatte 1 sind Abschirmplatten 2.1, 2.2, 2.3 aus wärmeisolierendem Material angeordnet und zwar so, daß zwischen der Oberseite der Abschirmplatten und der Unterseite der Dachplatte 1 jeweils ein Luftspalt 3.1, 3.2, 3.3 verbleibt. Die Oberseite der Abschirmplatten 2.1, 2.2, 2.3 ist mit einer Infrarotstrahlung nach außen reflektierenden Schicht 4.1, 4.2, 4.3 versehen, die beispielsweise als aufgeklebte Folie ausgebildet sein kann. Die Abschirmplatten 2.1, 2.2, 2.3 selbst können aus einem gleichzeitig Splitterschutz gewährenden Material, beispielsweise aus Glasfasermaterial, Polyethylen und dergleichen bestehen.

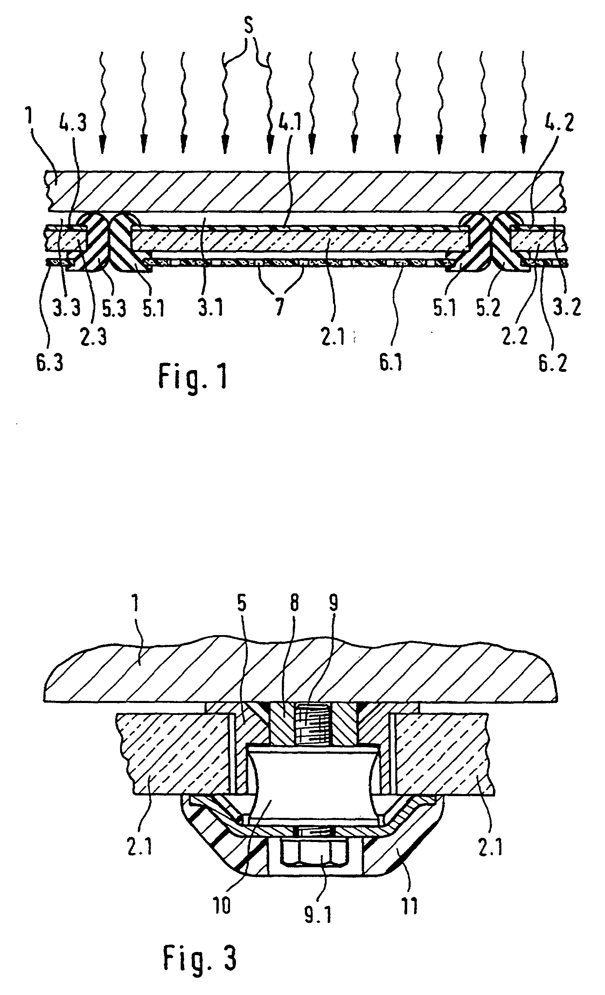

Die Breite des Luftspaltes 3.1, 3.2, 3.3 kann 10 bis 20mm, vorzugsweise 12mm betragen. Es hat sich als sehr vorteilhaft erwiesen, wenn dieser Luftspalt keine eine Wärmekonvektion erlaubende Verbindung mit dem Innenraum des Fahrzeugs hat. Um hier eine gute Dichtung der Räume des Luftspaltes 3.1, 3.2, 3.3 gegen den Fahrzeuginnenraum zu erreichen, sind die Abschirmplatten 2.1, 2.2, 2.3 mit umlaufenden, gleichzeitig als Abstandshalter dienenden Dichtungsmanschetten 5.1, 5.2, 5.3 versehen, durch welche die den Luftspalt bildenden Räume 3.1, 3.2, 3.3 rundum abgedichtet sind. Die Abschirmplatten 2.1, 2.2, 2.3 sind in der aus Fig. 1 ersichtlichen Weise in den Dichtungsmanschetten gehaltert und die Dichtungsmanschetten 5.1, 5.2 und 5.3 der nebeneinander angeordneten Abschirmplatten liegen unmittelbar aneinander an, so daß auch hier kein Zwischenraum entsteht, durch den Infrarotstrahlung von der Dachplatte 1 in den Innenraum des Fahrzeugs eindringen könnte. Die Dichtungsmanschetten können aus einem elastomeren Material wie Gummi oder Schaumstoff bestehen. Sie dienen gleichzeitig als Kantenschutz für die Abschirmplatten.

Der besondere Aufbau der beschriebenen Einrichtung eröffnet die Möglichkeit, in die Einrichtung zum Schutz des Innenraums des Kampffahrzeugs gegen Aufheizung eine weitere Einrichtung zu integrieren, die zur Absorption des im Innenraum entstehenden Schalls, beispielsweise durch die Antriebsmotoren und somit zur Senkung des Schallpegels im Innenraum dient.

Hierzu sind in den Dichtungsmanschetten 5.1, 5.2, 5.3 in der aus Fig. 1 ersichtlichen Weise zusätzliche Schallschluckmatten 6.1, 6.2, 6.3 gehaltert und zwar so, daß sie in einem vorgegebenen Abstand von der Innenfläche der Abschirmplatten 2.1, 2.2, 2.3 angeordnet sind. Die Schallschluckmatten 6.1, 6.2, 6.3 können in üblicher Weise aus einem großporigen Schaumkunststoffmaterial bestehen. Zur Verstärkung der schallschluckenden Eigenschaften können in an sich bekannter Weise in den Schallschluckmatten Öffnungen 7 vorgesehen sein, die die Schallschluckmatte ganz oder teilweise durchdringen und in ihren Abmessungen auf die am häufigsten auftretenden Schallfrequenzen abgestimmt sein können, so daß sie infolge ihrer Resonatoreigenschaften eine besonders hohe Absorption gewährleisten.

Die Funktionsweise der beschriebenen Einrichtung ist folgende:

Die von außen einfallende Sonnenstrahlung S heizt infolge ihres Infrarotanteils die Dachplatte 1 auf und diese gibt ihrerseits Infrarotstrahlung in Richtung auf den Innenraum des Fahrzeugs, also in der Zeichnung nach unten, ab. Diese in Richtung auf den Innenraum abgegebene Infrarotstrahlung wird an der Infrarotstrahlen reflektierenden Schicht 4.1, 4.2, 4.3 reflektiert und gelangt in den Luftspalt 3.1, 3.2, 3.3, wo sie zum Teil absorbiert wird. Der Rest wird beim Auftreffen auf die Unterseite der Dachplatte 1 absorbiert. Ein Eindringen der erhitzten Luft in den Luftspalten 3.1, 3.2, 3.3 in den Innenraum des Fahrzeugs ist infolge der Abdichtung mittels der Dichtungsmanschetten 5.1, 5.2, 5.3 nicht möglich. Eine Wärmeübertragung durch Wärmeleitung ist infolge des sowohl für die Abschirmplatten 2.1, 2.2, 2.3 als auch für die Dichtungsmanschetten 5.1, 5.2, 5.3 verwendeten wärmeisolierenden Materials ausgeschlossen.

Der von innen in Richtung auf die Außenwand des Fahrzeugs abgestrahlte Schall wird in den Schallschluckmatten 6.1, 6.2, 6.3 absorbiert, so daß keine den Schallpegel erhöhenden Schallreflexionen stattfinden.

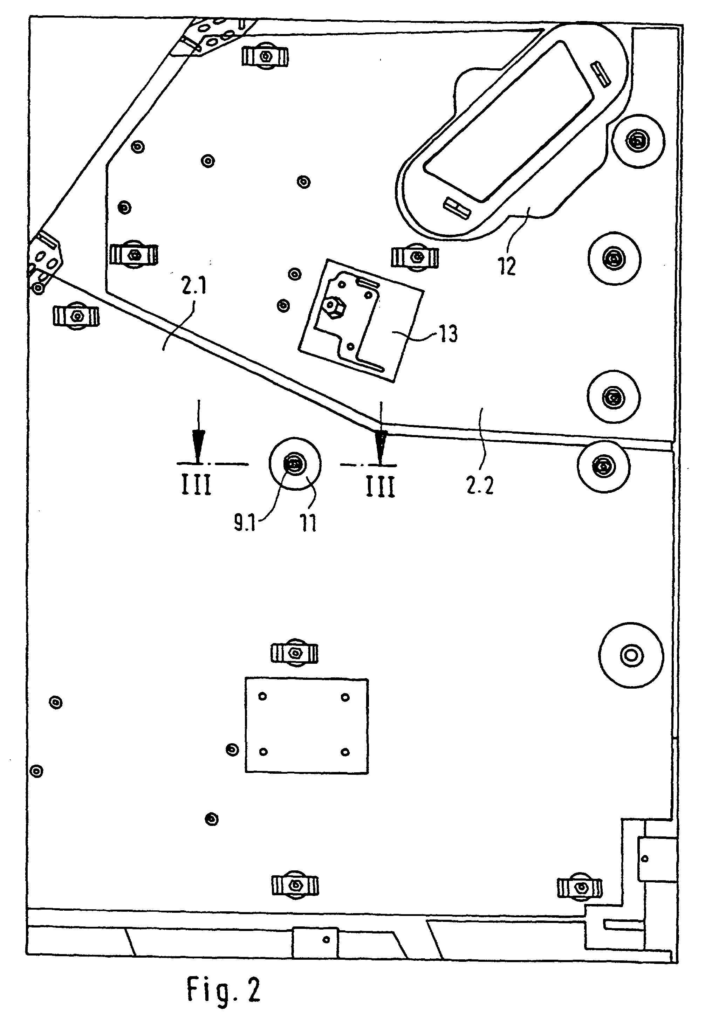

Aus Fig. 2 ist zu entnehmen, wie beispielsweise die beiden in Fig. 1 erkennbaren Abschirmplatten 2.1 und 2.2 an der Innenseite der Außenwand des Kampffahrzeuges angeordnet sein können, wobei durch die Dachplatte 1 hindurchgeführte Vorrichtungen wie Winkelspiegel und dgl. durch entsprechende Durchbrüche 12, 13 in der Abschirmplatte 2.2 hindurchgeführt sind.

Die Befestigung der Abschirmplatten an der Dachplatte 1 kann über Schraubenbolzenverbindungen geschehen, wobei dafür gesorgt werden muß, daß über diese Befestigungen möglichst wenig Wärme von der Dachplatte 1 in das Fahrzeuginnere übertragen wird.

Fig. 3 zeigt eine Befestigungsvorrichtung im Teilschnitt. Auf die Innenseite der Dachplatte 1 ist ein Gewindestück 8 aufgeschweißt, in welches ein Schraubenbolzen 9 eingeschraubt ist. Dieser Schraubenbolzen 9 durchgreift eine Öffnung in der Abschirmplatte 2.1 und trägt ein isolierendes Halterungselement 10, das in eine Halterungsmanschette 5 eingreift, die in der Öffnung der Abschirmplatte 2.1 angeordnet ist. Auf diese Weise ist eine feste Halterung gewährleistet, an der die Abschirmplatte 2.1 schwingungsgedämpft aufgehängt ist und die keine Wärmebrücke in den Innenraum hin bildet. Der Schraubenkopf 9.1 des Schraubenbolzens 9 ist zur Vermeidung von Verletzungen und Verringerung einer eventuellen Abstrahlung mit einer Abdeckkappe 11 abgedeckt.

## Patentansprüche

1. Einrichtung zum Schutz des Innenraums eines personenbefördernden Fahrzeugs gegen Aufheizung durch Wärmestrahlung, **dadurch gekennzeichnet, daß** an der von der Wärmequelle abgewandten Seite mindestens eines Teils einer Außen- und/oder Innenwand (1) des Fahrzeugs Abschirmplatten (2.1, 2.2, 2.3) aus wärmeisolierendem Material seitlich aneinander anschließend derart angeordnet sind, daß zwischen den einander zugekehrten Oberflächen der Außenoder Innenwand (1) und der Abschirmplatten (2.1, 2.2, 2.3) ein Luftspalt (3.1, 3.2, 3.3) vorgegebener Breite verbleibt, und die Abschirmplatten (2.1, 2.2, 2.3) auf ihrer der Außen- und/oder Innenwand (1) zugekehrten Seite mit einer Infrarotstrahlung in Richtung auf diese Wand reflektierenden Schicht (4.1, 4.2, 4.3) versehen sind.

2. Einrichtung nach Anspruch 1, **dadurch gekennzeichnet, daß** die Infrarotstrahlen reflektierende Schicht (4.1, 4.2, 4.3) als auf die Abschirmplatten (2.1, 2.2, 2.3) aufgebrachte, beispielsweise aufgeklebte Folie ausgebildet ist.

3. Einrichtung nach Anspruch 1 oder 2, **dadurch gekennzeichnet, daß** der Luftspalt (3.1, 3.2, 3.3) zwischen den einander zugekehrten Oberflächen der Außen- und/oder Innenwand (1) und der Abschirmplatten (2.1, 2.2, 2.3) 10 bis 20mm, vorzugsweise 12mm beträgt.

4. Einrichtung nach einem der Ansprüche 1 bis 3, **dadurch gekennzeichnet, daß** als Abstandshalter für die Abschirmplatten (2.1, 2.2, 2.3) umlaufende Dichtungsmanschetten (5.1, 5.2, 5.3) dienen, in denen sie gehaltert sind und die den jeweiligen Raum zwischen den einander zugekehrten Oberflächen der Außen- und/oder Innenwand und den Abschirmplatten (2.1, 2.2, 2.3) rundum abdichten.

5. Einrichtung nach Anspruch 4, **dadurch gekennzeichnet, daß** die Dichtungsmanschetten (5.1, 5.2, 5.3) nebeneinander angeordneter Abschirmplatten (2.1, 2.2, 2.3) unmittelbar aneinander anliegen.

6. Einrichtung nach einem der Ansprüche 1 bis 5, **dadurch gekennzeichnet, daß** zur Befestigung der Abschirmplatten (2.1) jeweils Öffnungen in der Abschirmplatte (2.1) durchgreifende Schraubenbolzen (9) dienen, die in an der Außen- und/oder Innenwand (1) des Fahrzeugs befestigte Gewindestücke (8) eingeschraubt sind und an denen jeweils isolierende Halterungselemente (10) angeordnet sind, die in eine an der Öffnung der Abschirmplatte (2.1) angeordnete Halterungsmanschette (5) eingreifen.

7. Einrichtung nach einem der Ansprüche 1 bis 6, **dadurch gekennzeichnet, daß** vor der Innenseite mindestens eines Teils der Abschirmplatten (2.1, 2.2, 2.3) eine Schallschluckmatte (6.1, 6.2, 6.3) angeordnet ist.

8. Einrichtung nach Anspruch 7, **dadurch gekennzeichnet, daß** die Schallschluckmatte (6.1, 6.2, 6.3) mit einem vorgegebenen Abstand zur Innenfläche der Abschirmplatte (2.1, 2.2, 2.3) angeordnet ist.

9. Einrichtung nach Anspruch 7 oder 8, **dadurch gekennzeichnet, daß** die Schallschluckmatte (6.1, 6.2, 6.3) sich zum Fahrzeuginnenraum hin öffende, die Schallschluckmatte ganz oder teilweise durchdringende Öffnungen (7) aufweist.

10. Einrichtung nach einem der Ansprüche 7 bis 9, **dadurch gekennzeichnet, daß** die Schallschluckmatte (6.1, 6.2, 6.3) an der Dichtungsmanschette (5.1, 5.2, 5.3) gehaltert ist.

## Claims

1. A means of protecting the inside of a person-carrying vehicle against heating by thermal radiation, **characterised in that** shielding panels (2.1, 2.2, 2.3) of thermally insulating material are arranged side by side on the side remote from the heat source of at least part of an outer and/or inner wall (1) of the vehicle, in such a way that an air gap (3.1, 3.2, 3.3) of predetermined width remains between the mutually facing surfaces of the outer or inner wall (1) and the shielding panels (2.1, 2.2, 2.3) and the shielding panels are provided on their side facing the outer and/or inner wall (1) with a layer (4.1, 4.2, 4.3) reflecting infrared radiation in the direction of this wall.

2. A means according to claim 1, **characterised in that** the infrared radiation-reflecting layer (4.1, 4.2, 4.3) takes the form of a film applied, for example glued, to the shielding panels (2.1, 2.2, 2.3).

3. A means according to claim 1 or claim 2, **characterised in that** the air gap (3.1, 3.2, 3.3) between the mutually facing surfaces of the outer and/or inner wall (1) and the shielding panels (2.1, 2.2, 2.3) amounts to 10 to 20 mm, preferably 12 mm.

4. A means according to one of claims 1 to 3, **characterised in that** spacers are provided for the shielding panels (2.1, 2.2, 2.3) in the form of circumferential sealing cuffs (5.1, 5.2, 5.3), in which the shielding panels are mounted and which provide a seal all around the respective space between the mutually facing surfaces of the outer and/or inner wall and the shielding panels (2.1, 2.2, 2.3).

5. A means according to claim 4, **characterised in that** the sealing cuffs (5.1, 5.2, 5.3) of shielding panels (2.1, 2.2, 2.3) arranged next to one another lie directly against one another.

6. A means according to one of claims 1 to 5, **characterised in that** the shielding panels (2.1) are attached in each case by screw bolts (9) passing through openings in the shielding panel (2.1), which screw bolts (9) are screwed into threaded members (8) attached to the outer and/or inner wall (1) of the vehicle and on which screw bolts (9) insulating mounting elements (10) are in each case arranged, which engage in a mounting cuff (5) arranged at the opening in the shielding panel (2.1).

7. A means according to one of claims 1 to 6, **characterised in that** a sound-absorbing mat (6.1, 6.2, 6.3) is arranged in front of the inside of at least part of the shielding panels (2.1, 2.2, 2.3).

8. A means according to claim 7, **characterised in that** the sound-absorbing mat (6.1, 6.2, 6.3) is arranged at a predetermined distance from the inner surface of the shielding panel (2.1, 2.2, 2.3).

9. A means according to claim 7 or claim 8, **characterised in that** the sound-absorbing mat (6.1, 6.2, 6.3) comprises openings (7) opening towards the inside of the vehicle and passing wholly or partly through the sound-absorbing mat.

10. A means according to one of claims 7 to 9, **characterised in that** the sound-absorbing mat (6.1, 6.2, 6.3) is mounted on the sealing cuff (5.1, 5.2, 5.3).

## Revendications

1. Dispositif de protection du compartiment intérieur d'un véhicule de transport de personnes contre l'échauffement dû à un rayonnement thermique, **caractérisé en ce que**, contre la face opposée à la source de chaleur, d'au moins une partie d'une paroi extérieure et/ou intérieure (1) du véhicule, sont agencées des plaques de protection (2.1, 2.2, 2.3) en matériau thermo-isolant, qui sont disposées les unes à côté des autres de telle sorte qu'il subsiste un intervalle d'aération (3.1, 3.2, 3.3) de largeur prédéfinie entre les surfaces orientées l'une vers l'autre de la paroi extérieure ou intérieure (1) et les plaques de protection (2.1, 2.2, 2.3), et les plaques de protection (2.1, 2.2, 2.3), sur leur face orientée vers la paroi extérieure et/ou intérieure (1), sont revêtues d'une couche (4.1, 4.2, 4.3) réfléchissant un rayonnement infrarouge vers ladite paroi.

2. Dispositif selon la revendication 1, **caractérisé en ce que** la couche (4.1, 4.2, 4.3) réfléchissant un rayonnement infrarouge est conçue sous forme de film appliqué, par exemple collé sur les plaques de protection (2.1, 2.2, 2.3).

3. Dispositif selon la revendication 1 ou 2, **caractérisé en ce que** l'intervalle d'aération (3.1, 3.2, 3.3) entre les surfaces orientées l'une vers l'autre de la paroi extérieure et/ou intérieure (1) et les plaques de protection (2.1, 2.2, 2.3) mesure de 10 à 20 mm, de préférence 12 mm.

4. Dispositif selon l'une quelconque des revendications 1 à 3, **caractérisé en ce que** des manchettes d'étanchéité (5.1, 5.2, 5.3) périphériques, remplissent la fonction d'écarteurs pour les plaques de protection (2.1, 2.2, 2.3) dans lesquelles elles sont maintenues et par lesquelles chaque espace formé entre les surfaces orientées l'une vers l'autre de la paroi extérieure et/ou intérieure et les plaques de protection (2.1, 2.2, 2.3) est rendu étanche sur tout le pourtour.

5. Dispositif selon la revendication 4, **caractérisé en ce que** les manchettes d'étanchéité (5.1, 5.2, 5.3) de plaques de protection (2.1, 2.2, 2.3) juxtaposées sont directement adjacentes.

6. Dispositif selon l'une quelconque des revendications 1 à 5, **caractérisé en ce que** les plaques de protection (2.1) sont fixées respectivement au moyen de boulons filetés (9), qui passent à travers des orifices ménagés dans la plaque de protection (2.1) et qui sont vissés dans des pièces taraudées (8) fixées contre la paroi extérieure et/ou intérieure (1) du véhicule et contre lesquels sont agencés des éléments de retenue (10) isolants, qui s'engagent dans une manchette de retenue (5) agencée dans l'orifice de la plaque de protection (2.1) .

7. Dispositif selon l'une quelconque des revendications 1 à 6, **caractérisé en ce qu'**une nappe insonorisante (6.1, 6.2, 6.3) est agencée devant la face intérieure d'au moins une partie des plaques de protection (2.1, 2.2, 2.3).

8. Dispositif selon la revendication 7, **caractérisé en ce que** la nappe insonorisante (6.1, 6.2, 6.3) est agencée à une distance prédéfinie de la face intérieure de la plaque de protection (2.1, 2.2, 2.3).

9. Dispositif selon la revendication 7 ou 8, **caractérisé en ce que** la nappe insonorisante (6.1, 6.2, 6.3) comporte des orifices (7) ouverts vers le compartiment intérieur du véhicule et traversant totalement ou partiellement la nappe insonorisante.

10. Dispositif selon l'une quelconque des revendications 7 à 9, **caractérisé en ce que** la nappe insonorisante (6.1, 6.2, 6.3) est maintenue contre la manchette d'étanchéité (5.1, 5.2, 5.3).
